# EUROPÄISCHE PATENTSCHRIFT

(11) **EP 3 449 541 B1**
(45) Veröffentlichungstag und Bekanntmachung des Hinweises auf die Patenterteilung: **10.06.2020**
(21) Anmeldenummer: 17716221.1
(22) Anmeldetag: 07.04.2017
(51) Int. Cl.: H02H 3/05, H02H 3/087, H02H 3/04

(54) **SICHERUNGSSYSTEM FÜR MINDESTENS EINEN VERBRAUCHER EINES FAHRZEUGS**
FUSE SYSTEM FOR AT LEAST ONE LOAD OF A VEHICLE
SYSTÈME DE SÉCURITÉ POUR AU MOINS UN CONSOMMATEUR D'UN VÉHICULE

(30) Priorität: 26.04.2016 DE 102016207020
(43) Veröffentlichungstag der Anmeldung: 06.03.2019
(73) Patentinhaber: Robert Bosch GmbH, 70442 Stuttgart (DE)
(72) Erfinder: LANG, Thomas, 72768 Reutlingen (DE); SCHIEMANN, Werner, 70734 Fellbach (DE)
(86) Internationale Anmeldenummer: PCT/EP2017/058413
(87) Internationale Veröffentlichungsnummer: WO 2017/186475

(56) Entgegenhaltungen:
- EP-A1- 2 498 359
- DE-A1-102008 012 605
- US-A1- 2014 226 248

## Beschreibung

Die Erfindung geht aus von einem Sicherungssystem für mindestens einen Verbraucher eines Fahrzeugs nach der Gattung des unabhängigen Patentanspruchs 1.

Aus dem Stand der Technik sind anstelle von Schmelzsicherungen und Relais integrierte Halbleiterbausteine für die Darstellung einer elektronischen Sicherungsfunktion bekannt. Diese umfassen in der Regel einen elektronischen Leistungsschalter zum Ein- und Abschalten einer angeschlossenen elektrischen Last und auch Elemente zur Darstellung von Schutzfunktionen bei Überstrom, Übertemperatur usw. Diese bekannten elektronischen Sicherungen weisen fest vorgegebene Auslöseströme und Auslösezeiten auf. Das bedeutet, dass die elektronische Sicherung in einem festen Betriebspunkt arbeitet und die Überstromabschaltung bereits an einem ersten unteren Schwellwert erfolgt, der nicht zu einer Schädigung des Halbleiterschalters führt.

Des Weiteren kann bei den bekannten elektronischen Sicherungen ein erhöhter Anlaufstrom ("Inrush Current"), welcher beispielsweise durch Vorladung eines Kondensators einer angeschlossenen elektrischen Lastimpedanz oder durch ein Losbrechmoment eines Elektromotors verursacht werden kann, zu einer Überstromerkennung und einer fälschlichen Auslösung der elektronischen Sicherung führen, obwohl die Stromhöhe noch keine kritische Schwelle erreicht hat, bei welcher mit einer Schädigung der Halbleiterschalter zu rechnen ist.

Zudem werden derartige Sicherungssysteme zunehmend "intelligenter", d.h. mit Mikrocontrollern ausgestattet, welche sich den veränderlichen Rahmenbedingungen anpassen können, um zusätzliche Aufgaben, wie beispielsweise Strommessung und Überwachung, übernehmen und/oder zusätzliche physikalische Anforderungen, wie beispielsweise Lichtbögen bei Systemen mit höheren Versorgungsspannung von über 24V, erfüllen zu können. Ein solcher Mikrocontroller erlaubt es auch, den Sicherungsbereich möglichst schmal zu halten, d.h. ein Überstromereignis wird sehr früh identifiziert und abgeschaltet.

Aus der DE102008012605A1 sind bereits ein Schutzschaltgerät zum Überwachen des elektrischen Stromflusses zu einem elektrischen Verbraucher bzw. Verfahren zur Überwachung des elektrischen Stromflusses zu einem elektrischen Verbraucher durch ein Schutzschaltgerät bekannt. Weitere gattungsgemäße Vorrichtungen sind in der EP2498359A1 bzw. US014/0226248A1 gezeigt.

### Offenbarung der Erfindung

Das Sicherungssystem für mindestens einen Verbraucher eines Fahrzeugs mit den Merkmalen des unabhängigen Patentanspruchs 1 hat den Vorteil, dass eine Auswerte- und Steuereinheit komplexere Auswertungen des erfassten Laststroms vorzugsweise unter Verwendung von Softwaremodulen bzw. Programmcode für den mindestens einen Verbraucher übernimmt, deren Ausführung im ein- oder mehrstelligen Mikrosekundenbereich erledigt werden kann. Die Auswerte- und Steuerschaltung reagiert im Falle eines so genannten harten (=niederohmigen) Kurzschlusses jedoch erheblich schneller und ist in der Lage, Auslöseentscheidungen auch ohne Beteiligung der Auswerte- und Steuereinheit treffen zu können. Ausführungsformen des erfindungsgemäßen Sicherungssystems können den Laststrom im Falle eines harten Kurzschlusses schnell abschalten und trotzdem eine verfrühte bzw. fehlerhafte Abschaltung des Laststroms vermeiden, bei welcher der Laststrom abgeschaltet wird, obwohl kein ausreichender Überstrom vorhanden ist. Da die ursprünglich vorgegebenen Abschaltkriterien des ersten Parametersatzes bei Ausfall der Auswerte- und Steuereinheit sehr schnell zu einer fehlerhaften bzw. verfrühten Abschaltung des Laststroms führen können, da die Auswerte- und Steuereinheit nicht mehr korrektiv eingreifen kann, überwacht die Auswerte- und Steuerschaltung die Funktion der Auswerte- und Steuereinheit und schaltet bei Ausfall in einen Notlaufbetrieb um. Im Notlaufbetrieb kann die Auswerte- und Steuerschaltung durch die Verwendung eines Notlaufparametersatzes die Funktionsfähigkeit des Sicherungssystems auch bei Ausfall der Auswerte- und Steuereinheit in vorteilhafter Weise aufrechterhalten. Dieser Notlaufbetrieb unterscheidet sich dadurch signifikant vom Normalbetrieb, dass jetzt nicht mehr alle Verbraucher, Zuleitungen usw. optimal geschützt werden, sondern das relevante Verbraucher beispielsweise mit maximal zulässigen Abschaltschwellwerten abgesichert werden. Das bedeutet, dass Ausführungsformen des erfindungsgemäßen Sicherungssystems im Notfallbetrieb keine redundanten Absicherungsfunktionen, sondern Absicherungsfunktionen mit einer erhöhten Fehlertoleranz und geändertem Absicherungsziel zur Verfügung stellen. Dadurch können Ausführungsformen ein fehlertolerantes Sicherungssystem zur Verfügung stellten, welches Hardwarekomponenten und Softwarekomponenten umfasst.

Ausführungsformen der vorliegenden Erfindung stellen ein Sicherungssystem für mindestens einen Verbraucher eines Fahrzeugs zur Verfügung, welches eine Sicherungsvorrichtung mit mindestens einer elektronischen Sicherung für den mindestens einen Verbraucher und einer Auswerte- und Steuerschaltung umfasst. Die Auswerte- und Steuerschaltung wertet den Laststrom durch die mindestens eine elektronische Sicherung aus und vergleicht den Laststrom mit mindestens einem vorgegebenen Abschaltkriterium eines ersten Parametersatzes. Die Auswerte- und Steuerschaltung leitet einen Auslöseprozess ein, welcher die mindestens eine elektronische Sicherung auslöst und den Laststrom zum korrespondierenden Verbraucher abschaltet, wenn das mindestens eine vorgegebene Abschaltkriterium erfüllt ist. Hierbei wertet eine Auswerte- und Steuereinheit den Laststrom durch die mindestens eine elektronische Sicherung zusätzlich aus und vergleicht den Laststrom mit mindestens einem vorgegebenen komplexen Abschaltkriterium eines komplexen Parametersatzes und unterbricht den von der Auswerte- und Steuerschaltung eingeleiteten Auslöseprozess durch Ausgabe mindestens eines korrespondierenden Steuersignals an die Auswerte- und Steuerschaltung für eine vorbestimmte Zeitspanne. Die Auswerte- und Steuerschaltung bricht den Auslöseprozess ab, wenn der Laststrom das mindestens eine komplexe Abschaltkriterium nicht erfüllt oder löst die mindestens eine elektronische Sicherung aus und schaltet den Laststrom zum korrespondierenden Verbraucher ab, wenn der Laststrom das mindestens eine komplexe Abschaltkriterium erfüllt. Zudem überwacht die Auswerte- und Steuerschaltung eine Funktionalität der Auswerte- und Steuereinheit und schaltet bei einer erkannten fehlerhaften Funktion der Auswerte- und Steuereinheit in einen Notlaufbetrieb um, in welchem die Auswerte- und Steuerschaltung Steuersignale der Auswerte- und Steuereinheit ignoriert und den Laststrom durch die mindestens eine elektronische Sicherung auswertet und mit mindestens einem vorgegebenen Abschaltkriterium eines Notlaufparametersatzes vergleicht. Die Auswerte- und Steuerschaltung löst die mindestens eine elektronische Sicherung aus und schaltet den Laststrom zum korrespondierenden Verbraucher ab, wenn das mindestens eine vorgegebene Abschaltkriterium des Notlaufparametersatzes erfüllt ist.

Unter der Auswerte- und Steuereinheit kann vorliegend ein elektrisches Gerät, wie beispielsweise ein Steuergerät, insbesondere ein Bordnetzsteuergerät, verstanden werden, welches erfasste Sensor- und/oder Messsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Durch die in den abhängigen Ansprüchen aufgeführten Maßnahmen und Weiterbildungen sind vorteilhafte Verbesserungen des im unabhängigen Patentanspruch 1 angegebenen Sicherungssystems für mindestens einen Verbraucher eines Fahrzeugs möglich.

Besonders vorteilhaft ist, dass die Auswerte- und Steuerschaltung als anwendungsspezifische integrierte Schaltung (ASIC) und/oder als diskrete elektronische Schaltung und die Auswerte- und Steuereinheit als Mikrocontroller ausgeführt werden können. Dadurch können die autonomen Hardwarekomponenten des fehlertoleranten Sicherungssystems einfach als ASIC bzw. diskrete elektronische Schaltung und die Softwarekomponente durch den Mikrocontroller realisiert werden.

In vorteilhafter Ausgestaltung des erfindungsgemäßen Sicherungssystems kann der erste Parametersatz der Auswerte- und Steuerschaltung Abschaltkriterien umfassen, welche durch erste Abschaltschwellen für die Lastströme eine Absicherung der Lastströme des mindestens einen Verbrauchers in einem Zeitbereich von kleiner gleich 10µs umsetzen. Zudem kann der Notlaufparametersatz der Auswerte- und Steuerschaltung Abschaltkriterien umfassen, welche zweite Abschaltschwellen für die Lastströme, welche höher als die ersten Abschaltschwellen sein können, für mindestens einen priorisierten Verbraucher und dritte Abschaltschwellen für die Lastströme, welche niedriger als die ersten Abschaltschwellen sein können, für mindestens einen nachrangigen Verbraucher betreffen können. So können die zweiten Abschaltschwellen für die Lastströme jeweils einem maximal zulässigen Grenzwert des zugehörigen priorisierten Verbrauchers entsprechen und/oder die dritten Abschaltschwellen für die Lastströme können zum Abschalten des mindestens einen nachrangigen Verbrauchers führen. Des Weiteren kann der komplexe Parametersatz der Auswerte- und Steuereinheit Abschaltkriterien umfassen, welche durch komplexe Auswertevorgänge eine Absicherung der Lastströme und/oder Leistungen und/oder Energien des mindestens einen Verbrauchers in einem Zeitbereich von größer als 10µs umsetzen können. Der komplexe Parametersatz der Auswerte- und Steuereinheit kann beispielsweise Profile für den mindestens einen Verbraucher absichern, welche auf Kombinationen von Lastströmen und/oder Leistungen und/oder Energien basieren. Somit übernimmt die Auswerte- und Steuerschaltung die Ansteuer- und Versorgungsaufgaben sowie die Bereitstellung der vorprogrammierten Abschaltschwellen. Ein intelligentes Sicherungssystem sichert jedoch nicht nur Lastströme, sondern auch Leistungen- und/oder Energien ab. Dies alles, wie auch die Verhinderung von Fehlabschaltungen durch erhöhte Anlaufströme "Inrush-Currents", übernimmt die Auswerte- und Steuereinheit. Die Absicherung durch die Auswerte- und Steuerschaltung erfolgt parallel zu der Absicherung durch die Auswerte- und Steuereinheit permanent im Hintergrund. Während die Auswerte- und Steuerschaltung damit auf reine Stromschwellen im unteren Zeitbereich kleiner, gleich 10µs absichert, sichert die Auswerte- und Steuereinheit durch komplexe Auswertevorgänge komplexe Abschaltkriterien, wie beispielsweise Kombinationen aus Lastströmen, Leistungen, Energien oder darauf basierender Profile ab. Dies erfolgt jedoch in der Regel für höhere Zeitbereiche größer als 10µs, vorzugsweise größer als 100us. Im Notlaufbetrieb fällt die Absicherung durch die Auswerte- und Steuereinheit vollständig weg.

In weiterer vorteilhafter Ausgestaltung des erfindungsgemäßen Sicherungssystems kann die mindestens eine elektronische Sicherung bidirektional arbeiten und den Strompfad zum korrespondierenden Verbraucher in beide Stromrichtungen absichern.

In weiterer vorteilhafter Ausgestaltung des erfindungsgemäßen Sicherungssystems kann die mindestens eine elektronische Sicherung mindestens einen Halbleiterschalter, welcher im leitenden Zustand den zugehörigen Verbraucher mit einem Laststrom versorgen und im sperrenden Zustand den Laststrom abschalten kann, und mindestens einen Strommesser umfassen, welcher den Laststrom durch den mindestens einen Halbleiterschalter erfassen und ein zugehöriges Messsignal an die Auswerte- und Steuerschaltung und die Auswerte- und Steuereinheit ausgeben kann, welches den erfassten Laststrom repräsentieren kann. Dies ermöglicht einen einfachen kostengünstigen Aufbau der elektronischen Sicherung mit handelsüblichen Bauteilen.

In weiterer vorteilhafter Ausgestaltung des erfindungsgemäßen Sicherungssystems kann der mindestens eine Halbleiterschalter einen Messshunt für den korrespondierenden Strommesser ausbildet. Dadurch kann in vorteilhafter Weise Layout-Fläche und Bauraum eingespart werden.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

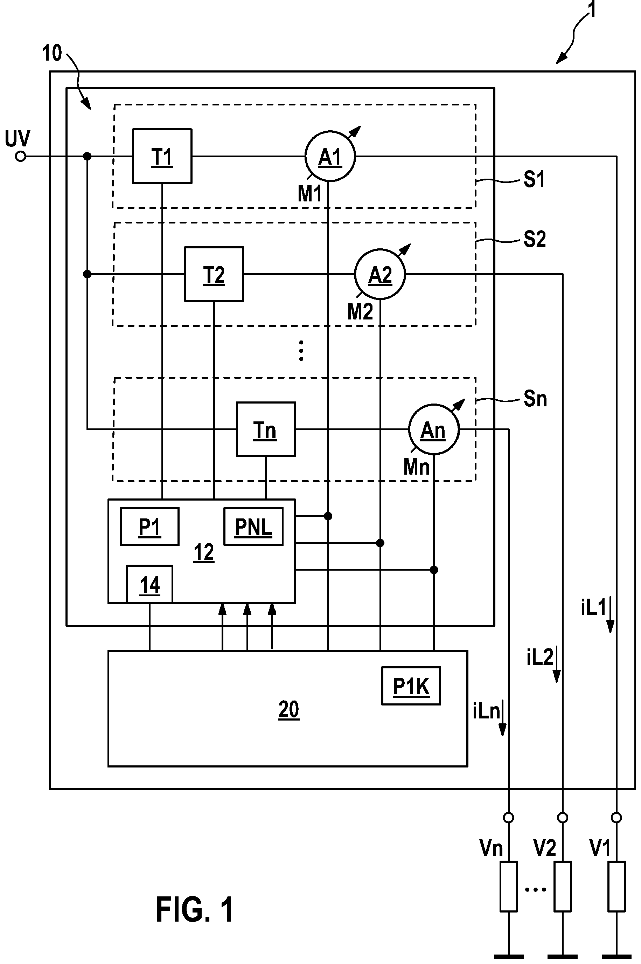

Fig. 1 zeigt ein schematisches Blockdiagramm eines Ausführungsbeispiels eines erfindungsgemäßen Sicherungssystems für mindestens einen Verbraucher eines Fahrzeugs.

### Ausführungsformen der Erfindung

Wie aus Fig. 1 ersichtlich ist, umfasst das dargestellte Ausführungsbeispiel eines erfindungsgemäßen Sicherungssystem 1 für mindestens einen Verbraucher V1, V2, Vn eines Fahrzeugs eine Sicherungsvorrichtung 10, welche mindestens eine elektronische Sicherung S1, S2, Sn für den mindestens einen Verbraucher V1, V2, Vn und eine Auswerte- und Steuerschaltung 12 umfasst. Die eine Auswerte- und Steuerschaltung 12 wertet den Laststrom iL1, iL2, iLn durch die mindestens eine elektronische Sicherung S1, S2, Sn aus und vergleicht den Laststrom iL1, iL2, iLn mit mindestens einem vorgegebenen Abschaltkriterium eines ersten Parametersatzes P1. Hierbei leitet die Auswerte- und Steuerschaltung 12 einen Auslöseprozess ein, welcher die mindestens eine elektronische Sicherung S1, S2, Sn auslöst und den Laststrom iL1, iL2, iLn zum korrespondierenden Verbraucher V1, V2, Vn abschaltet, wenn das mindestens eine vorgegebene Abschaltkriterium erfüllt ist. Zudem wertet eine Auswerte- und Steuereinheit 20 den Laststrom iL1, iL2, iLn durch die mindestens eine elektronische Sicherung S1, S2, Sn zusätzlich aus und vergleicht den Laststrom iL1, iL2, iLn mit mindestens einem vorgegebenen komplexen Abschaltkriterium eines komplexen Parametersatzes P1K und unterbricht den von der Auswerte- und Steuerschaltung 12 eingeleiteten Auslöseprozess durch Ausgabe mindestens eines korrespondierenden Steuersignals an die Auswerte- und Steuerschaltung 12 für eine vorbestimmte Zeitspanne. Die Auswerte- und Steuerschaltung 12 bricht den Auslöseprozess ab, wenn der Laststrom iL1, iL2, iLn das mindestens eine komplexe Abschaltkriterium nicht erfüllt oder löst die mindestens eine elektronische Sicherung S1, S2, Sn aus und schaltet den Laststrom iL1, iL2, iLn zum korrespondierenden Verbraucher V1, V2, Vn ab, wenn der Laststrom iL1, iL2, iLn das mindestens eine komplexe Abschaltkriterium erfüllt. Des Weiteren überwacht die Auswerte- und Steuerschaltung 12 eine Funktionalität der Auswerte- und Steuereinheit 20 und schaltet bei einer erkannten fehlerhaften Funktion der Auswerte- und Steuereinheit 20 in einen Notlaufbetrieb um, in welchem die Auswerte- und Steuerschaltung 12 Steuersignale der Auswerte- und Steuereinheit 20 ignoriert und den Laststrom iL1, iL2, iLn durch die mindestens eine elektronische Sicherung S1, S2, Sn auswertet und mit mindestens einem vorgegebenen Abschaltkriterium eines Notlaufparametersatzes PNL vergleicht. Im Notlaufbetrieb löst die Auswerte- und Steuerschaltung 12 die mindestens eine elektronische Sicherung S1, S2, Sn aus und schaltet den Laststrom iL1, iL2, iLn zum korrespondierenden Verbraucher V1, V2, Vn ab, wenn das mindestens eine vorgegebene Abschaltkriterium des Notlaufparametersatzes PNL erfüllt ist.

Wie aus Fig. 1 weiter ersichtlich ist, umfasst das dargestellte Sicherungssystem 1 n elektronische Sicherungen, von welchen beispielhaft jeweils drei elektronische Sicherungen S1, S2, Sn dargestellt sind, für n Verbraucher, von denen beispielhaft drei Verbraucher V1, V2, Vn dargestellt sind. Die elektronischen Sicherungen S1, S2, Sn umfassen jeweils mindestens einen Halbleiterschalter T1, T2, Tn, welcher im leitenden Zustand den zugehörigen Verbraucher V1, V2, Vn mit einem Laststrom iL1, iL2, iLn versorgt und im sperrenden Zustand den Laststrom iL1, iL2, iLn abschaltet, und mindestens einen Strommesser A1, A2, An, welcher den Laststrom iL1, iL2, iLn durch den mindestens einen Halbleiterschalter T1, T2, Tn erfasst und ein zugehöriges Messsignal M1, M2, Mn an die Auswerte- und Steuerschaltung 12 und die Auswerte- und Steuereinheit 20 ausgibt, welches den erfassten Laststrom iL1, iL2, iLn repräsentiert. Die elektronischen Sicherungen S1, S2, Sn arbeiten bidirektional und sichern den Strompfad zum korrespondierenden Verbraucher V1, V2, Vn in beide Stromrichtungen ab. Bei einem nicht dargestellten Ausführungsbeispiel können die Halbleiterschalter T1, T2, Tn der elektronischen Sicherungen S1, S2, Sn jeweils einen Messshunt für den korrespondierenden Strommesser A1, A2, An ausbilden. Eine Überwachungsfunktion 14, welche die Funktionalität der Auswerte- und Steuereinheit 20 überwacht, kann beispielsweise in Art einer aus dem Stand der Technik bekannten "Watchdog-Funktion" in der Auswerte- und Steuerschaltung 12 implementiert werden.

Im dargestellten Ausführungsbeispiel ist die Auswerte- und Steuerschaltung 12 als anwendungsspezifische integrierte Schaltung ASIC ausgeführt, welche einen Speicher aufweist in welchem der erste Parametersatz P1 und der Notlaufparametersatz PNL gespeichert sind. Selbstverständlich kann die Auswerte- und Steuerschaltung 12 auch als diskrete elektronische Schaltung ausgeführt werden. Die Auswerte- und Steuereinheit 20 ist als Mikrocontroller ausgeführt, in welchem der komplexe Parametersatz P1K gespeichert ist. Die als Mikrocontroller ausgeführte Auswerte- und Steuereinheit 20 arbeitet Programmcode von Softwaremodulen ab, um komplexe Auswertungen der erfassten Lastströme iL1, iL2, iLn vorzunehmen.

Der erste Parametersatz P1 der Auswerte- und Steuerschaltung 12 umfasst Abschaltkriterien, welche durch erste Abschaltschwellen für die Lastströme iL1, iL2, iLn eine Absicherung der Lastströme iL1, iL2, iLn des mindestens einen Verbrauchers V1, V2, Vn in einem Zeitbereich von kleiner gleich 10µs umsetzen. Der Notlaufparametersatz PNL der Auswerte- und Steuerschaltung 12 umfasst Abschaltkriterien, welche zweite Abschaltschwellen für die Lastströme iL1, iL2, iLn, welche höher als die ersten Abschaltschwellen sind, für mindestens einen priorisierten Verbraucher V1, V2, Vn und dritte Abschaltschwellen für die Lastströme iL1, iL2, iLn, welche niedriger als die ersten Abschaltschwellen sind, für mindestens einen nachrangigen Verbraucher V1, V2, Vn betreffen. Im dargestellten Ausführungsbeispiel entsprechen die zweiten Abschaltschwellen für die Lastströme iL1, iL2, iLn jeweils einem maximal zulässigen Grenzwert des zugehörigen priorisierten Verbrauchers V1, V2, Vn und/oder die dritten Abschaltschwellen für die Lastströme iL1, iL2, iLn führen zum Abschalten des mindestens einen nachrangigen Verbrauchers V1, V2, Vn führen. Unter der Annahme, dass ein erster Verbraucher V1 und ein zweiter Verbraucher priorisierte Verbraucher sind, welche für den Fahrzeugfunktion sehr wichtig sind, und ein n-ter Verbraucher Vn ein nachgeordneter Verbraucher ist, der für die Funktion des Fahrzeugs nicht erforderlich ist, sind im Notlaufparametersatz PNL höhere zweite Abschaltschwellen für die Lastströme iL1, iL2 des ersten und zweiten Verbrauchers V1, V2 gespeichert als die ersten Abschaltschwellen im ersten Parametersatz P1. Für den Laststrom iLn durch den n-ten Verbraucher Vn ist eine niedriger dritte Abschaltschwelle im Notlaufparametersatz PNL gespeichert als die erste Abschaltschwelle im ersten Parametersatz P1. Im Extremfall führt die niedrige dritte Abschaltschwelle zur direkten Abschaltung des n-ten Verbrauchers Vn.

Der komplexe Parametersatz P1K der Auswerte- und Steuereinheit 20 umfasst Abschaltkriterien, welche durch komplexe Auswertevorgänge eine Absicherung der Lastströme iL1, iL2, iLn und/oder Leistungen und/oder Energien des mindestens einen Verbrauchers V1, V2, Vn in einem Zeitbereich von größer als 10µs umsetzen. So sichert im dargestellten Ausführungsbeispiel der komplexe Parametersatz P1K der Auswerte- und Steuereinheit 20 Profile für den mindestens einen Verbraucher V1, V2, Vn ab, welche auf Kombinationen von Lastströmen iL1, iL2, iLn und/oder Leistungen und/oder Energien basieren.

In Ausführungsformen der vorliegenden Erfindung basiert die Hardware des Sicherungssystems auf der als ASIC ausgeführten Auswerte- und Steuerschaltung, einer Leistungselektronik in Form der Halbleiterschalter und der als Mikrocontroller ausgeführten Auswerte- und Steuereinheit. Die als ASIC ausgeführte Auswerte- und Steuerschaltung verfügt über eine analoge Messeinrichtung, welche unabhängig von der beteiligten als Mikrocontroller ausgeführten Auswerte- und Steuereinheit vorgegebene Stromschwellwerte überwacht. Werden diese Stromschwellwerte durch einen Überstrom überschritten, leitet die als ASIC ausgeführte Auswerte- und Steuerschaltung den Auslöse- bzw. Abschaltprozess ein. Die als Mikrocontroller ausgeführte Auswerte- und Steuereinheit kann diesen Abschaltprozess jedoch durch schnellen Eingriff für eine vorbestimmte Zeitdauer verhindern. Parallel dazu überwacht die als ASIC ausgeführte Auswerte- und Steuerschaltung die als Mikrocontroller ausgeführte Auswerte- und Steuereinheit. Insofern die als Mikrocontroller ausgeführte Auswerte- und Steuereinheit weiter aktiv ist, kann die Auswerte- und Steuereinheit die Abschaltung verhindern. Ist die als Mikrocontroller ausgeführte Auswerte- und Steuereinheit jedoch ausgefallen, würde hier der Überstrom die Abschaltung provozieren. Wenn die als ASIC ausgeführte Auswerte- und Steuerschaltung den Ausfall der als Mikrocontroller ausgeführten Auswerte- und Steuereinheit jedoch erkannt hat, kann die als ASIC ausgeführte Auswerte- und Steuerschaltung autonom auf einen zweiten, im Vorfeld vorgegebenen Notlaufparametersatz zugreifen. Dieser zweite Notlaufparametersatz hat aber im Gegenteil zum ersten Parametersatz nicht die optimale Absicherung als erstes Ziel sondern die maximale Funktionssicherheit. Das kann beinhalten, dass nachrangige Verbraucher sofort abgeschaltet werden, um wichtigen Verbrauchern erhöhte Energiereserven zur Verfügung stellen zu können. In obigem Beispiel könnte z.B. die Abschaltschwelle auf die höchstzulässige Grenze angehoben werden, um der Abschaltung durch den Überstrom vorzubeugen.

## Patentansprüche

1. Sicherungssystem (1) für mindestens einen Verbraucher (V1, V2, Vn) eines Fahrzeugs, mit einer Sicherungsvorrichtung (10), welche mindestens eine elektronische Sicherung (S1, S2, Sn) für den mindestens einen Verbraucher (V1, V2, Vn) und eine Auswerte- und Steuerschaltung (12) umfasst, welche den Laststrom (iL1, iL2, iLn) durch die mindestens eine elektronische Sicherung (S1, S2, Sn) auswertet und mit mindestens einem vorgegebenen Abschaltkriterium eines ersten Parametersatzes (P1) vergleicht, wobei die Auswerte- und Steuerschaltung (12) einen Auslöseprozess einleitet, welcher die mindestens eine elektronische Sicherung (S1, S2, Sn) auslöst und den Laststrom (iLl, iL2, iLn) zum korrespondierenden Verbraucher (V1, V2, Vn) abschaltet, wenn das mindestens eine vorgegebene Abschaltkriterium erfüllt ist, **dadurch gekennzeichnet, dass** eine Auswerte- und Steuereinheit (20) den Laststrom (iLl, iL2, iLn) durch die mindestens eine elektronische Sicherung (S1, S2, Sn) zusätzlich auswertet und mit mindestens einem vorgegebenen komplexen Abschaltkriterium eines komplexen Parametersatzes (P1K) vergleicht und den von der Auswerte- und Steuerschaltung (12) eingeleiteten Auslöseprozess durch Ausgabe mindestens eines korrespondierenden Steuersignals an die Auswerte- und Steuerschaltung (12) für eine vorbestimmte Zeitspanne unterbricht, wobei die Auswerte- und Steuerschaltung (12) den Auslöseprozess abbricht, wenn der Laststrom (iLl, iL2, iLn) das mindestens eine komplexe Abschaltkriterium nicht erfüllt oder die mindestens eine elektronische Sicherung (S1, S2, Sn) auslöst und den Laststrom (iLl, iL2, iLn) zum korrespondierenden Verbraucher (V1, V2, Vn) abschaltet, wenn der Laststrom (iLl, iL2, iLn) das mindestens eine komplexe Abschaltkriterium erfüllt, wobei die Auswerte- und Steuerschaltung (12) eine Funktionalität der Auswerte- und Steuereinheit (20) überwacht und bei einer erkannten fehlerhaften Funktion der Auswerte- und Steuereinheit (20) in einen Notlaufbetrieb umschaltet, in welchem die Auswerte- und Steuerschaltung (12) Steuersignale der Auswerte- und Steuereinheit (20) ignoriert und den Laststrom (iL1, iL2, iLn) durch die mindestens eine elektronische Sicherung (S1, S2, Sn) auswertet und mit mindestens einem vorgegebenen Abschaltkriterium eines Notlaufparametersatzes (PNL) vergleicht, wobei die Auswerte- und Steuerschaltung (12) die mindestens eine elektronische Sicherung (S1, S2, Sn) auslöst und den Laststrom (iLl, iL2, iLn) zum korrespondierenden Verbraucher (V1, V2, Vn) abschaltet, wenn das mindestens eine vorgegebene Abschaltkriterium des Notlaufparametersatzes (PNL) erfüllt ist.

2. Sicherungssystem nach Anspruch 1, **dadurch gekennzeichnet, dass** die Auswerte- und Steuerschaltung (12) als anwendungsspezifische integrierte Schaltung (ASIC) und/oder als diskrete elektronische Schaltung und die Auswerte- und Steuereinheit (20) als Mikrocontroller ausgeführt ist.

3. Sicherungssystem nach Anspruch 1 oder 2, **dadurch gekennzeichnet, dass** ausgeführt ist der erste Parametersatz (P1) der Auswerte- und Steuerschaltung (12) Abschaltkriterien umfasst, welche durch erste Abschaltschwellen für die Lastströme (iLl, iL2, iLn) eine Absicherung der Lastströme (iLl, iL2, iLn) des mindestens einen Verbrauchers (V1, V2, Vn) in einem Zeitbereich von kleiner gleich 10µs umsetzen.

4. Sicherungssystem nach Anspruch 3, **dadurch gekennzeichnet, dass** der Notlaufparametersatz (PNL) der Auswerte- und Steuerschaltung (12) Abschaltkriterien umfasst, welche zweite Abschaltschwellen für die Lastströme (iLl, iL2, iLn), welche höher als die ersten Abschaltschwellen sind, für mindestens einen priorisierten Verbraucher (V1, V2, Vn) und dritte Abschaltschwellen für die Lastströme (iLl, iL2, iLn), welche niedriger als die ersten Abschaltschwellen sind, für mindestens einen nachrangigen Verbraucher (V1, V2, Vn) betreffen.

5. Sicherungssystem nach Anspruch 4, **dadurch gekennzeichnet, dass** die zweiten Abschaltschwellen für die Lastströme (iLl, iL2, iLn) jeweils einem maximal zulässigen Grenzwert des zugehörigen priorisierten Verbrauchers (V1, V2, Vn) entsprechen und/oder die dritten Abschaltschwellen für die Lastströme (iLl, iL2, iLn) zum Abschalten des mindestens einen nachrangigen Verbrauchers (V1, V2, Vn) führen.

6. Sicherungssystem nach einem der Ansprüche 1 bis 5, **dadurch gekennzeichnet, dass** der komplexe Parametersatz (P1K) der Auswerte- und Steuereinheit (20) Abschaltkriterien umfasst, welche durch komplexe Auswertevorgänge eine Absicherung der Lastströme (iLl, iL2, iLn) und/oder Leistungen und/oder Energien des mindestens einen Verbrauchers (V1, V2, Vn) in einem Zeitbereich von größer als 10µs umsetzen.

7. Sicherungssystem nach Anspruch 6, **dadurch gekennzeichnet, dass** der komplexe Parametersatz (P1K) der Auswerte- und Steuereinheit (20) Profile für den mindestens einen Verbraucher (V1, V2, Vn) absichert, welche auf Kombinationen von Lastströmen (iLl, iL2, iLn) und/oder Leistungen und/oder Energien basieren.

8. Sicherungssystem nach einem der Ansprüche 1 bis 7, **dadurch gekennzeichnet, dass** die mindestens eine elektronische Sicherung (S1, S2, Sn) bidirektional arbeitet und den Strompfad zum korrespondierenden Verbraucher (V1, V2, Vn) in beide Stromrichtungen absichert.

9. Sicherungssystem nach einem der Ansprüche 1 bis 8, **dadurch gekennzeichnet, dass** die mindestens eine elektronische Sicherung (S1, S2, Sn) mindestens einen Halbleiterschalter (T1, T2, Tn), welcher im leitenden Zustand den zugehörigen Verbraucher (V1, V2, Vn) mit einem Laststrom (iLl, iL2, iLn) versorgt und im sperrenden Zustand den Laststrom (iLl, iL2, iLn) abschaltet, und mindestens einen Strommesser (A1, A2, An) umfasst, welcher den Laststrom (iLl, iL2, iLn) durch den mindestens einen Halbleiterschalter (T1, T2, Tn) erfasst und ein zugehöriges Messsignal (M1, M2, Mn) an die Auswerte- und Steuerschaltung (12) und die Auswerte- und Steuereinheit (20) ausgibt, welches den erfassten Laststrom (iLl, iL2, iLn) repräsentiert.

10. Sicherungssystem nach Anspruch 9, **dadurch gekennzeichnet, dass** der mindestens eine Halbleiterschalter (T1, T2, Tn) einen Messshunt für den korrespondierenden Strommesser (A1, A2, An) ausbildet.

## Claims

1. Fuse system (1) for at least one load (V1, V2, Vn) of a vehicle, having a fuse apparatus (10) that comprises at least one electronic fuse (S1, S2, Sn) for the at least one load (V1, V2, Vn) and an evaluation and control circuit (12) that evaluates the load current (iLl, iL2, iLn) through the at least one electronic fuse (S1, S2, Sn) and compares said load current with at least one specified disconnection criterion of a first parameter set (P1), wherein the evaluation and control circuit (12) initiates a trip process that trips the at least one electronic fuse (S1, S2, Sn) and disconnects the load current (iLl, iL2, iLn) to the corresponding load (V1, V2, Vn) if the at least one specified disconnection criterion is satisfied, **characterized in that** an evaluation and control unit (20) additionally evaluates the load current (iLl, iL2, iLn) through the at least one electronic fuse (S1, S2, Sn) and compares said load current (iLl, iL2, iLn) with at least one specified complex disconnection criterion of a complex parameter set (P1K) and interrupts the trip process initiated by the evaluation and control circuit (12) by outputting at least one corresponding control signal to the evaluation and control circuit (12) for a predetermined period of time, wherein the evaluation and control circuit (12) terminates the trip process if the load current (iLl, iL2, iLn) does not satisfy the at least one complex disconnection criterion or trips the at least one electronic fuse (S1, S2, Sn) and disconnects the load current (iLl, iL2, iLn) to the corresponding load (V1, V2, Vn) if the load current (iLl, iL2, iLn) satisfies the at least one complex disconnection criterion, wherein the evaluation and control circuit (12) monitors a functionality of the evaluation and control unit (20) and, in the event of erroneous operation of the evaluation and control unit (20) being identified, changes over to an emergency mode in which the evaluation and control circuit (12) ignores control signals from the evaluation and control unit (20) and evaluates the load current (iLl, iL2, iLn) through the at least one electronic fuse (S1, S2, Sn) and compares said load current with at least one specified disconnection criterion of an emergency parameter set (PNL), wherein the evaluation and control circuit (12) trips the at least one electronic fuse (S1, S2, Sn) and disconnects the load current (iLl, iL2, iLn) to the corresponding load (V1, V2, Vn) if the at least one specified disconnection criterion of the emergency parameter set (PNL) is satisfied.

2. Fuse system according to Claim 1, **characterized in that** the evaluation and control circuit (12) is designed as an application-specific integrated circuit (ASIC) and/or as a discrete electronic circuit, and the evaluation and control unit (20) is designed as a microcontroller.

3. Fuse system according to Claim 1 or 2, **characterized in that** is designed the first parameter set (P1) of the evaluation and control circuit (12) comprises disconnection criteria, which by means of first disconnection thresholds for the load currents (iLl, iL2, iLn) implement a fuse protection of the load currents (iLl, iL2, iLn) of the at least one load (V1, V2, Vn) in a time frame of less than or equal to 10µs.

4. Fuse system according to Claim 3, **characterized in that** the emergency parameter set (PNL) of the evaluation and control circuit (12) comprises disconnection criteria, which relate to second disconnection thresholds for the load currents (iLl, iL2, iLn) which are higher than the first disconnection thresholds, for at least one prioritized load (V1, V2, Vn) and to third disconnection thresholds for the load currents (iLl, iL2, iLn) which are lower than the first disconnection thresholds, for at least one low-priority load (V1, V2, Vn).

5. Fuse system according to Claim 4, **characterized in that** the second disconnection thresholds for the load currents (iLl, iL2, iLn) each correspond to a maximum permissible limit of the associated prioritized load (V1, V2, Vn) and/or the third disconnection thresholds for the load currents (iLl, iL2, iLn) lead to the disconnection of the at least one low-priority load (V1, V2, Vn).

6. Fuse system according to any one of Claims 1 to 5, **characterized in that** the complex parameter set (P1K) of the evaluation and control unit (20) comprises disconnection criteria, which by means of complex evaluation operations implement a fuse protection of the load currents (iLl, iL2, iLn) and/or powers and/or energies of the at least one load (V1, V2, Vn) in a time frame of greater than 10µs.

7. Fuse system according to Claim 6, **characterized in that** the complex parameter set (P1K) of the evaluation and control unit (20) safeguards profiles for the at least one load (V1, V2, Vn), which are based on combinations of load currents (iLl, iL2, iLn) and/or powers and/or energies.

8. Fuse system according to any one of Claims 1 to 7, **characterized in that** the at least one electronic fuse (S1, S2, Sn) works bi-directionally and protects the current path to the corresponding load (V1, V2, Vn) in both current directions of flow.

9. Fuse system according to any one of Claims 1 to 8, **characterized in that** the at least one electronic fuse (S1, S2, Sn) comprises at least one semiconductor switch (Tl, T2, Tn), which in the conducting state supplies the associated load (V1, V2, Vn) with a load current (iLl, iL2, iLn) and in the blocking state disconnects the load current (iLl, iL2, iLn), and at least one ammeter (A1, A2, An), which measures the load current (iLl, iL2, iLn) through the at least one semiconductor switch (Tl, T2, Tn) and outputs an associated measuring signal (M1, M2, Mn) to the evaluation and control circuit (12) and the evaluation and control unit (20), which represents the measured load current (iLl, iL2, iLn).

10. Fuse system according to Claim 9, **characterized in that** the at least one semiconductor switch (Tl, T2, Tn) forms a measuring shunt for the corresponding ammeter (A1, A2, An).

## Revendications

1. Système de protection (1) pour au moins un consommateur électrique (V1, V2, Vn) d'un véhicule, avec un dispositif de protection (10) comprenant au moins un fusible électronique (S1, S2, Sn) pour ledit au moins un consommateur électrique (V1, V2, Vn) et un circuit d'évaluation et de commande (12) qui évalue le courant de charge (iL1, iL2, iLn) à travers ledit au moins un fusible électronique (S1, S2, Sn) et le compare à au moins un critère de coupure prédéfini d'un premier ensemble de paramètres (P1), dans lequel le circuit d'évaluation et de commande (12) lance un processus de déclenchement qui déclenche ledit au moins un fusible électronique (S1, S2, Sn) et coupe le courant de charge (iL1, iL2, iLn) pour le consommateur électrique correspondant (V1, V2, Vn) si ledit au moins un critère de coupure prédéfini est rempli, **caractérisé en ce qu'**une unité d'évaluation et de commande (20) évalue également le courant de charge (iL1, iL2, iLn) à travers ledit au moins un fusible électronique (S1, S2, Sn) et le compare à au moins un critère de coupure complexe prédéfini d'un ensemble de paramètres complexes (P1K) et interrompt pendant une durée prédéterminée le processus de déclenchement lancé par le circuit d'évaluation et de commande (12) en sortant au moins un signal de commande correspondant à destination du circuit d'évaluation et de commande (12), dans lequel le circuit d'évaluation et de commande (12) abandonne le processus de déclenchement si le courant de charge (iL1, iL2, iLn) ne remplit pas ledit au moins un critère de coupure complexe ou déclenche ledit au moins un fusible électronique (S1, S2, Sn) et coupe le courant de charge (iL1, iL2, iLn) pour le consommateur électrique correspondant (V1, V2, Vn) si le courant de charge (iL1, iL2, iLn) remplit ledit au moins un critère de coupure complexe, dans lequel le circuit d'évaluation et de commande (12) surveille une fonctionnalité de l'unité d'évaluation et de commande (20) et commute en cas de fonctionnement erroné reconnu de l'unité d'évaluation et de commande (20) sur un fonctionnement de secours dans lequel le circuit d'évaluation et de commande (12) ignore les signaux de commande de l'unité d'évaluation et de commande (20) et évalue le courant de charge (iL1, iL2, iLn) à travers ledit au moins un fusible électronique (S1, S2, Sn) et le compare à au moins un critère de coupure prédéfini d'un ensemble de paramètres de fonctionnement de secours (PNL), dans lequel le circuit d'évaluation et de commande (12) déclenche ledit au moins un fusible électronique (S1, S2, Sn) et coupe le courant de charge (iL1, iL2, iLn) pour le consommateur électrique correspondant (V1, V2, Vn) si ledit au moins un critère de coupure prédéfini de l'ensemble de paramètres de fonctionnement de secours (PNL) est rempli.

2. Système de protection selon la revendication 1, **caractérisé en ce que** le circuit d'évaluation et de commande (12) est réalisé sous la forme d'un circuit intégré spécifique à une application (ASIC) et/ou d'un circuit électronique discret et l'unité d'évaluation et de commande (20) est réalisée sous la forme d'un microcontrôleur.

3. Système de protection selon la revendication 1 ou 2, **caractérisé en ce que** est réalisé le premier ensemble de paramètres (P1) du circuit d'évaluation et de commande (12) comprend des critères de coupure qui mettent en œuvre par des premiers seuils de coupure pour les courants de charge (iL1, iL2, iLn) une protection des courants de charge (iL1, iL2, iLn) du au moins un consommateur électrique (V1, V2, Vn) dans une plage de temps inférieure ou égale à 10 µs.

4. Système de protection selon la revendication 3, **caractérisé en ce que** l'ensemble de paramètres de fonctionnement de secours (PNL) du circuit d'évaluation et de commande (12) comprend des critères de coupure concernant des deuxièmes seuils de coupure pour les courants de charge (iL1, iL2, iLn) qui sont supérieurs aux premiers seuils de coupure pour au moins un consommateur électrique prioritaire (V1, V2, Vn) et des troisièmes seuils de coupure pour les courants de charge (iL1, iL2, iLn) qui sont inférieurs aux premiers seuils de coupure pour au moins un consommateur électrique de priorité inférieure (V1, V2, Vn).

5. Système de protection selon la revendication 4, **caractérisé en ce que** les deuxièmes seuils de coupure pour les courants de charge (iL1, iL2, iLn) correspondent respectivement à une valeur limite admissible maximale du consommateur électrique prioritaire associé (V1, V2, Vn) et/ou les troisièmes seuils de coupure pour les courants de charge (iL1, iL2, iLn) entraînent la coupure du au moins un consommateur électrique de priorité inférieure (V1, V2, Vn) .

6. Système de protection selon l'une quelconque des revendications 1 à 5, **caractérisé en ce que** l'ensemble de paramètres complexes (P1K) de l'unité d'évaluation et de commande (20) comprend des critères de coupure mettant en œuvre par des opérations d'évaluation complexes une protection des courants de charge (iL1, iL2, iLn) et/ou des puissances et/ou des énergies du au moins un consommateur électrique (V1, V2, Vn) dans une plage de temps supérieure à 10 ps.

7. Système de protection selon la revendication 6, **caractérisé en ce que** l'ensemble de paramètres complexes (P1K) de l'unité d'évaluation et de commande (20) protège pour ledit au moins un consommateur électrique (V1, V2, Vn) des profils qui sont basés sur des combinaisons de courants de charge (iL1, iL2, iLn) et/ou de puissances et/ou d'énergies.

8. Système de protection selon l'une quelconque des revendications 1 à 7, **caractérisé en ce que** ledit au moins un fusible électronique (S1, S2, Sn) fonctionne de manière bidirectionnelle et protège le trajet de courant jusqu'au consommateur électrique correspondant (V1, V2, Vn) dans les deux sens du courant.

9. Système de protection selon l'une quelconque des revendications 1 à 8, **caractérisé en ce que** ledit au moins un fusible électronique (S1, S2, Sn) comprend au moins un commutateur statique (T1, T2, Tn), qui alimente le consommateur électrique associé (V1, V2, Vn) en courant de charge (iL1, iL2, iLn) à l'état conducteur et coupe le courant de charge (iL1, iL2, iLn) à l'état bloqué, et au moins un ampèremètre (A1, A2, An) qui détecte le courant de charge (iL1, iL2, iLn) à travers ledit au moins un commutateur statique (T1, T2, Tn) et émet un signal de mesure associé (M1, M2, Mn) à destination du circuit d'évaluation et de commande (12) et de l'unité d'évaluation et de commande (20) qui représente le courant de charge détecté (iL1, iL2, iLn).

10. Système de protection selon la revendication 9, **caractérisé en ce que** ledit au moins un commutateur statique (T1, T2, Tn) réalise un shunt de mesure pour l'ampèremètre correspondant (A1, A2, An).
